# EUROPÄISCHE PATENTSCHRIFT

(11) **EP 3 653 539 B1**
(45) Veröffentlichungstag und Bekanntmachung des Hinweises auf die Patenterteilung: **17.08.2022**
(21) Anmeldenummer: 19205233.0
(22) Anmeldetag: 25.10.2019
(51) Int. Cl.: B65G 1/04, B65G 47/61, B65G 1/137, B65G 11/02

(54) **FÖRDERANLAGE UND VERFAHREN ZUM FÖRDERN VON WAREN**
METHOD AND CONVEYOR SYSTEM FOR CONVEYING GOODS
INSTALLATION DE TRANSPORT ET PROCÉDÉ DE TRANSPORT DES MARCHANDISES

(30) Priorität: 15.11.2018 DE 102018219583
(43) Veröffentlichungstag der Anmeldung: 20.05.2020
(73) Patentinhaber: Dürkopp Fördertechnik GmbH, 33719 Bielefeld (DE)
(72) Erfinder: Schnadwinkel, Thomas, 33803 Steinhagen (DE); Elebracht, Doris, 33739 Bielefeld (DE)
(74) Vertreter: Rau, Schneck & Hübner Patentanwälte Rechtsanwälte PartGmbB

(56) Entgegenhaltungen:
- WO-A1-2017/015681
- DE-A1-102016 208 866
- US-A- 3 448 870

## Beschreibung

Die vorliegende Patentanmeldung nimmt die Priorität der deutschen Patentanmeldung DE 10 2018 219 583.8 in Anspruch.

Die Erfindung betrifft eine Förderanlage und ein Verfahren zum Fördern von Waren, insbesondere zum Fördern von Waren mit unterschiedlichen Fördereigenschaften.

Für die Förderung und Sortierung von Waren sind unterschiedliche Förderanlagen bekannt. Für große und schwere Waren dient beispielsweise ein Liege-Förderer mit einem Sorter zum sortierten Fördern der Waren an verschiedene Abgabestellen der Förderanlage. Eine derartige Förderanlage ist bekannt aus WO 2017/015 681 A1. Aus DE 10 2016 208 866 A1 ist eine Fördergutübergabestation sowie eine damit ausgestattete Hängefördereinrichtung bekannt. US 3,448,870 offenbart eine Hängefördereinrichtung mit einer Entladestation, an der die Fördergüter an einen Schwerkraftförderer abgegeben werden.

Es ist die Aufgabe der vorliegenden Erfindung, das Fördern, insbesondere das Sortieren, von Waren zu verbessern, insbesondere das Fördern unterschiedlicher Warentypen in einer Förderanlage zu ermöglichen, und insbesondere den Warendurchsatz von, insbesondere bestehenden, Förderanlagen zu erhöhen.

Diese Aufgabe ist erfindungsgemäß gelöst durch eine Förderanlage mit den im Anspruch 1 angegebenen Merkmalen und durch ein Verfahren mit den im Anspruch 14 angegebenen Merkmalen.

Erfindungsgemäß wurde erkannt, dass in einer Förderanlage ein Liege-Förderer, der zum liegenden Fördern von Waren dient, mit einem Hänge-Förderer, der zum Fördern von an einem Warenträger hängenden Waren dient, vorteilhaft kombiniert werden kann. Das Fördern umfasst insbesondere das Sortieren der Waren. Eine derartige Förderanlage ist beispielsweise eine Förderanlage zum Fördern und Sortieren von Einzelwaren, die vereinzelt gefördert werden. Eine derartige Anlage dient beispielsweise zum Kommissionieren von Einzelwaren aus einem Warenlager zu Aufträgen an einem Warenausgang. Eine derartige Förderanlage kann auch ein Verteilzentrum für Postsendungen sein. Es wurde erkannt, dass insbesondere eine bereits bestehende Förderanlage mit einem Liege-Förderer vorteilhaft durch einen Hänge-Förderer zu einer erfindungsgemäßen Förderanlage nachgerüstet werden kann.

Der Liege-Förderer dient insbesondere zum Fördern von Liege-Förderer-Waren. Liege-Förderer-Waren sind insbesondere große und schwere Waren, die hängend nicht oder nur umständlich gefördert werden können, wie beispielsweise große Kartons. Die Liege-Förderer-Waren werden entweder unmittelbar auf dem Liege-Förderer, insbesondere einem Förderband, oder in einem Förderbehälter, der insbesondere auf dem Förderband angeordnet ist, liegend gefördert. Der Liege-Förderer weist erfindungsgemäß eine Sortiervorrichtung mit mehreren Abgabestellen auf, an welchen die Waren sortiert bereitgestellt werden. Als Sortiervorrichtung für den Liege-Förderer kann ein Sorter beispielsweise ein Quergurtsorter, der im englischen Sprachgebrauch als Cross-Belt-Sorter bekannt ist, ein Kippschalensorter, ein Schuhsorter oder ein Push-Tray-Sorter verwendet werden. Ein derartiger Sorter weist insbesondere eine eigene Mechanik auf, die zum Ausschleusen der Waren dient. Anstelle eines Sorters kann die Ausschleusung der Waren auch mit klassischen Komponenten der Fördertechnik erfolgen, wie beispielsweise einem Pusher.

Mit dem Hänge-Förderer werden insbesondere Hänge-Förderer-Waren gefördert. Hänge-Förderer-Waren sind insbesondere kleine und leichte Waren, insbesondere Briefe, Postsendungen und kleine und leichte Pakete. Hänge-Förderer-Waren können auch verpackte Textilien, insbesondere verpackte Bekleidungsstücke, sein. Hänge-Förderer-Waren können auch Waren sein, die für die liegende Förderung nicht zuverlässig gefördert werden können wie beispielsweise runde Waren.

Es wurde gefunden, dass wenn der Hänge-Förderer erfindungsgemäß mit mindestens einer der Abgabestellen des Liege-Förderers zur Abgabe der Waren verbunden ist, die Leistung der Förderanlage erhöht werden kann. Die Hänge-Förderer-Waren werden von dem Warenträger an einer der Abgabestellen unmittelbar abgegeben. Die Hänge-Förderer-Waren können schwerkraftbedingt von dem Warenträger des Hänge-Förderers auf den insbesondere darunter angeordneten Liege-Förderer fallen. Insbesondere erfolgt zwischen dem Hänge-Förderer und dem Liege-Förderer eine schwerkraftbedingte Förderung der Waren. Die Waren können insbesondere gesteuert aus dem Hänge-Förderer an den Abgabestellen abgegeben werden. Insbesondere ist eine automatisierte Abgabe der Waren von dem Hänge-Förderer an den Abgabestellen möglich. Es ist insbesondere möglich, die Warenströme in Liege-Förderer-Waren und Hänge-Förderer-Waren aufzuteilen, wobei die Mehrzahl der kleinen Produkte als Hänge-Förderer-Waren mit dem Hänge-Förderer gefördert werden.

Die Sortiervorrichtung kann mit geringer Fördergeschwindigkeit betrieben werden, sodass entlang eines Förderabschnitts der Sortiervorrichtung, also die Abgabestellen, enger und damit dichter gepackt angeordnet sein können. Die Förderanlage ermöglicht einen hohen Warendurchsatz einerseits und eine hohe Dichte von Abgabestellen andererseits.

Es wurde auch erkannt, dass durch die Kombination des Liege-Förderers mit dem Hänge-Förderer das Spektrum der zu fördernden Waren in der Förderanlage erweitert ist. Insbesondere ist der Hänge-Förderer in einem räumlichen Bereich der Förderanlage angeordnet, der für den Betrieb des Liege-Förderers ungenutzt ist. Zusätzlicher Bauraumbedarf für den Hänge-Förderer ist nicht erforderlich. Die erfindungsgemäße Förderanlage ist kompakt gebaut.

Der Hänge-Förderer weist eine Hänge-Förderer-Richtung vorgebende Förderschiene auf, entlang der die Hänge-Förderer-Waren gefördert werden. Entlang der Förderschiene wird ein Warenträger gefördert. Die Förderung kann passiv, insbesondere schwerkraftbedingt, erfolgen, indem die Förderschiene zumindest abschnittsweise mit einem Gefälle gegenüber der Horizontalen geneigt angeordnet ist. Ein Neigungswinkel des Gefälles beträgt insbesondere mindestens 3°, insbesondere mindestens 5° und insbesondere mindestens 7°. Zusätzlich oder alternativ kann die Förderung der Warenträger entlang der Förderschiene angetrieben erfolgen, insbesondere durch eine endlos umlaufende Förderkette oder durch mehrere, jeweils umlaufende Förderketten, die die Warenträger mitnimmt.

Die Ausführung der Abgabestellen als Rampe der Sortiervorrichtung zur Förderung der Waren zu den Abgabestellen, insbesondere als geneigte Rampe und/oder angetriebene, insbesondere ungeneigte, Rampe eröffnet unmittelbar oberhalb der Rampe, insbesondere im Bereich eines Auslaufs, an den Abgabestellen, Bauraum für den Hänge-Förderer. Die Rampen sind mit einem ersten Ende an einen Förderabschnitt des Liege-Förderers angeschlossen und weisen ein zu einem zweiten Ende hin gerichtetes Gefälle und/oder einen Rampen-Antrieb auf. An dem zweiten Ende der Rampe, das den Förderabschnitt gegenüberliegend angeordnet ist, werden die Waren abgegeben. Die Waren werden entlang der Rampe von der Fördereinheit weg zu der Abgabestelle hin gefördert.

Eine Anordnung des Hänge-Förderers gemäß Anspruch 2 ermöglicht eine besonders kompakte Ausführung der Förderanlage. Es wurde gefunden, dass insbesondere der oberhalb der Abgabestellen angeordnete Bauraum bei einem Liege-Förderer ungenutzt ist und in diesem Bereich der Hänge-Förderer vorteilhaft angeordnet sein kann, um den Hänge-Förderer mit den Abgabestellen fördertechnisch zu verbinden. Die Waren aus dem Hänge-Förderer können besonders vorteilhaft von oben auf die Abgabestellen abgegeben werden.

Zusätzlich oder alternativ ist es möglich, dass der Hänge-Förderer seitlich zu den Abgabestellen verläuft und/oder die Waren aus dem Hänge-Förderer seitlich an die Abgabestellen abgegeben werden.

Die Ausführung des Warenträgers als Transporttasche gemäß Anspruch 3 ermöglicht einen besonders zuverlässigen und vorteilhaft automatisierbaren Warentransport im Hänge-Förderer. Hängend geförderte Transporttaschen sind aus der Hängefördertechnik bekannt. Die Transporttasche wird mittels eines sogenannten Rolladapters an der Förderschiene rollend gefördert. Eine derartige Transporttasche ist aus DE 10 2008 026 720 A1 bekannt. Vorteilhaft ist es, wenn die Transporttasche automatisch entleerbar ausgeführt ist. Dazu kann die Transporttasche kippbar oder schwenkbar angeordnet sein, um die Waren über eine obere und/oder seitliche Öffnung auszuleeren. Die Transporttasche kann auch zum Abgeben der Ware umgestülpt werden. Die Transporttasche kann auch im Bereich einer Rückwand eine Abgabeöffnung aufweisen, durch die die Ware an die Abgabestelle abgegeben werden kann. Es ist alternativ denkbar, dass die Transporttasche, insbesondere im Bereich des Taschenbodens, öffenbar ausgeführt ist und im Bereich der Abgabestelle, insbesondere im Vorbeifahren an der Abgabestelle, insbesondere automatisch, geöffnet wird und die Waren aus der Transporttasche, insbesondere nach unten herausfallen. Die Transporttasche weist insbesondere einen öffenbaren und wieder verschließbaren Teil auf, wobei in der geöffneten Anordnung eine Abgabeöffnung gebildet wird, durch die hindurch die Ware aus der Transporttasche, insbesondere schwerkraftbedingt nach unten, herausfällt.

Anstelle der Transporttasche kann der Warenträger auch als Trägeretikett ausgeführt sein, das eine Öffnung für einen Haken oder ein öffenbares Halteelemente, wie beispielsweise ein Karabinerhaken, aufweist, der an der Förderschiene hängend gefördert wird. Die Öffnung bildet eine Öse des Trägeretiketts. Das Trägeretikett ist insbesondere an der Ware selbst und/oder an der Verpackung der Ware befestigt, insbesondere aufgeklebt. Zum Abgeben der Ware aus dem Hänge-Förderer an der Abgabestelle wird das Trägeretikett von dem Haken oder dem öffenbaren Halteelement gelöst, insbesondere durch Schwenken des Hakens bzw. Öffnen des Halteelements und Aushängen des Trägeretiketts und/oder durch Aufschneiden oder Zerstören des Trägeretiketts durch eine Schneidvorrichtung, insbesondere eine mechanische Schneidvorrichtung oder eine thermische Schneidvorrichtung.

Alternativ kann das Trägeretikett auch an einem Klemmelement klemmend gefördert werden. In diesem Fall kann das Trägeretikett ohne Öffnung ausgeführt sein. Das Klemmelement selbst kann an der Förderschiene des Hänge-Förderers verlagerbar ausgeführt sein. Alternativ kann das Klemmelement an dem Haken hängend gefördert werden. An der Abgabestelle wird das Klemmelement manuell oder automatisiert zur Abgabe der Hänge-Förderer-Waren geöffnet.

Die Ausführung einer Transporttasche gemäß Anspruch 4 ermöglicht eine verbesserte Abgabe der Waren an den Abgabestellen. Im Bereich der Abgabestellen kann der entlang des Hänge-Förderers ein passives Element, insbesondere in Form eines Anschlags angeordnet sein, sodass die Transporttasche im Vorbeifahren um die Vertikalachse durch den Anschlag gedreht wird. Zusätzlich oder alternativ kann die Transporttasche auch einen aktiven Drehantrieb aufweisen, der eine Drehung der Transporttasche um die Vertikalachse im Bereich der Abgabestellen ermöglicht.

Mit mindestens einer Aufgabestelle gemäß Anspruch 5 können die Waren, insbesondere zentralisiert, in den Liege-Förderer und/oder in den Hänge-Förderer aufgegeben werden. Insbesondere kann bei der Aufgabe der Waren am Aufgabeplatz manuell und/oder automatisiert entschieden werden, ob die Ware in den Liege-Förderer oder Hänge-Förderer aufgegeben wird.

Eine Hänge-Förderer-Aufgabestelle gemäß Anspruch 6 ermöglicht die dezentrale Anordnung einer spezialisierten Aufgabestelle. An der Hänge-Förderer-Aufgabestelle, die insbesondere weit entfernt von einer zentralen Aufgabestelle angeordnet sein kann, werden ausschließlich Hänge-Förderer-Waren in den Hänge-Förderer aufgegeben. Diese Aufgabe kann insbesondere automatisiert erfolgen. Es wurde erkannt, dass die Waren in Abhängigkeit des Warentyps an verschiedenen Orten in einer Förderanlage gelagert und für die Aufgabe bereitgestellt werden. Insbesondere kleine Waren, die als Hänge-Förderer-Waren geeignet sind, können mit räumlicher Entfernung, insbesondere mit großer räumlicher Entfernung von 20m bis 1.000m, insbesondere 100m bis 500m, von dem Liege-Förderer angeordnet und mittels des Hänge-Förderers unkompliziert zu den Abgabestellen gefördert werden.

Mindestens eine Hänge-Förderer-Abgabestelle gemäß Anspruch 7 zusätzlich zu den Abgabestellen des Sorters ermöglicht eine verbesserte und insbesondere direkte automatisierte Abgabe, insbesondere kleiner Produkte, beispielsweise in Postsäcke oder Behälter.

Ein Bremselement an den Abgabestellen gemäß Anspruch 9 gewährleistet eine sichere Abgabe der Waren an den Abgabestellen, insbesondere der Hänge-Förderer-Waren aus dem Hänge-Förderer. Das Bremselement bewirkt ein Abbremsen der Abgabegeschwindigkeit, mit der die Hänge-Förderer-Ware abgegeben wird. Die Abgabegeschwindigkeit ist insbesondere eine Fallgeschwindigkeit.

Die Förderschiene des Hänge-Förderers weist gemäß Anspruch 10 mindestens einen Förderstrang auf, der entlang der Abgabestellen, insbesondere entlang aller Abgabestellen des Sorters, verläuft. Insbesondere sind die Abgabestellen sequentiell mittels des Hänge-Förderers miteinander verbunden. Die Warenträger werden entlang der Hänge-Förderer-Richtung an dem Hänge-Förderer an allen Abgabestellen entlanggeführt. Bei dieser Ausführung ist es ausreichend, wenn der Hänge-Förderer genau einen Förderstrang aufweist. Die Anlagen- und Investitionskosten für einen derartigen Hänge-Förderer sind reduziert. Um die Förderrate, also den Warendurchsatz, zu erhöhen, können mehrere Förderstränge nebeneinander die Abgabestellen sequentiell verbinden.

Zusätzlich oder alternativ kann ein Hänge-Förderer gemäß Anspruch 11 derart ausgeführt sein, dass jeweils ein Förderstrang mit einer Gruppe von Abgabestellen fördertechnisch verbunden ist. Eine Gruppe von Abgabestellen kann eine oder mehrere Abgabestellen aufweisen. Im Fall eines Quergurtsorters, bei dem sich die Rampen zu den Abgabestellen beidseitig erstrecken, kann beispielsweise eine erste Gruppe von Abgabestellen linksseitig und eine zweite Gruppe von Abgabestellen rechtsseitig des Förderabschnitts angeordnet sein. Für jede Gruppe von Abgabestellen können ein oder mehrere Förderstränge vorgesehen sein, um diese Abgabestellen fördertechnisch zu verbinden. Es ist auch denkbar, die Verbindung der Abgabestelle mit den Fördersträngen des Hänge-Förderers logisch zu unterteilen, beispielsweise Abgabestellen, die einem bestimmten Kunden zugeordnet sind, zusammenzufassen, oder Abgabestellen, an welche bestimmte Waren abgegeben werden, zusammenzufassen. Die Gruppen von Abgabestellen können eine unterschiedliche Anzahl an Abgabestellen aufweisen.

Eine Konstruktion gemäß Anspruch 12 ist robust und materialeffizient. Ein separater Grundaufbau für einen Hänge-Förderer ist entbehrlich.

Ein Abgabe-Speicherelement gemäß Anspruch 13 ermöglicht eine zumindest vorübergehende Zwischenspeicherung einer an der Abgabestelle abzugebende Ware. Ein Abgabe-Speicherelement kann beispielsweise eine zusätzliche Rampe und/oder ein Netz sein, das oberhalb der Rampe der Abgabestelle angeordnet ist, wenn Waren aus dem Hänge-Förderer im Bereich der Abgabestelle abgegeben werden, fallen diese auf das Abgabe-Speicherelement und werden dort zwischengespeichert. Es ist denkbar, die Ware von dem Abgabe-Speicherelement beispielsweise zeitgesteuert oder sensorgesteuert an die Rampe und zur Abgabestelle weiter zu fördern. Es ist auch denkbar, dass das Abgabe-Speicherelement eine Abgabeöffnung aufweist, über die die Ware direkt an der Abgabestelle abgegeben werden kann. Bei dieser Variante weist die Abgabestelle eine zusätzliche Abgabemöglichkeit auf. Es können mehrere Abgabe-Speicherelemente pro Abgabestelle, insbesondere mehrere Abgabemöglichkeiten an der Abgabestelle, vorgesehen sein.

Ein Abgabe-Speicherelement kann auch in Form einer schwenkbaren Klappe ausgeführt sein, die wechselweise entweder die Förderung von Liege-Förderer-Waren aus dem Liege-Förderer oder Hänge-Förderer-Waren aus dem Hänge-Förderer über die Rampe zu den Abgabestellen ermöglicht. Die jeweils andere Ware wird durch die verschwenkte Klappe entlang der Förderung an der Rampe gehindert. Dadurch können Untergruppen der abzugebenden Waren an der Abgabestelle gebildet werden.

Ein Verfahren gemäß Anspruch 14 weist im Wesentlichen die Vorteile der entsprechenden Förderanlage auf, worauf hiermit verwiesen wird.

Sowohl die in den Patentansprüchen angegebenen Merkmale als auch die in den nachfolgenden Ausführungsformen der erfindungsgemäßen Förderanlage angegebenen Merkmale sind jeweils für sich alleine oder in Kombination miteinander geeignet, dem erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung von Ausführungsbeispielen anhand der Zeichnung. Es zeigen:
- Fig. 1: eine schematische Darstellung einer Förderanlage in einer ersten Ausführungsform mit einem Hänge-Förderer, der einen Förderstrang aufweist, der Abgabestellen sequentiell miteinander verbindet,
- Fig. 2: eine perspektivische, vergrößerte Darstellung einer Förderanlage gemäß Fig. 1,
- Fig. 3: eine Seitenansicht der Förderanlage gemäß Fig. 2,
- Fig. 4: eine Draufsicht auf die Förderanlage gemäß Fig. 2,
- Fig. 5: eine Fig. 3 entsprechende Darstellung einer weiteren Ausführungsform mit unterschiedlich geneigt ausgeführten Rampen,
- Fig. 6: eine Fig. 3 entsprechende Darstellung einer weiteren Ausführungsform mit einer an der Abgabestelle vorgesehenen zusätzlichen Rampe für den Hänge-Förderer,
- Fig. 7: eine Draufsicht auf die Anordnung gemäß Fig. 6,
- Fig. 8: eine Fig. 3 entsprechende Darstellung gemäß einer weiteren Ausführungsform mit Abgabe-Speicherelementen in Form von zusätzlicher Rampen an einer Abgabestelle,
- Fig. 9: eine Fig. 8 entsprechende Darstellung mit einem Abgabe-Speicherelement in Form eines Netzes,
- Fig. 10: eine schematische Darstellung einer Ausführungsform des Hänge-Förderers mit einem Trägeretikett als Warenträger, wobei ein Haken mittels einer Entkoppelungseinheit betätigt wird, um den Warenträger vom Haken zu entkoppeln,
- Fig. 11: eine Fig. 10 entsprechende Darstellung, bei der die Entkoppelungseinheit als Schneideinheit ausgeführt ist,
- Fig. 12: eine Fig. 8 entsprechende Darstellung mit einem Bremselement für aus dem Hänge-Förderer abgegebenen Waren an der Abgabestelle,
- Fig. 13: eine Fig. 3 entsprechende, schematische Seitenansicht des Hänge-Förderers, wobei zur Abgabe der Waren die Transporttasche um eine Vertikalachse gedreht ist,
- Fig. 14: eine Fig. 1 entsprechende schematische Ansicht einer Förderanlage mit mehreren Fördersträngen für verschiedene Gruppen von Abgabestellen.

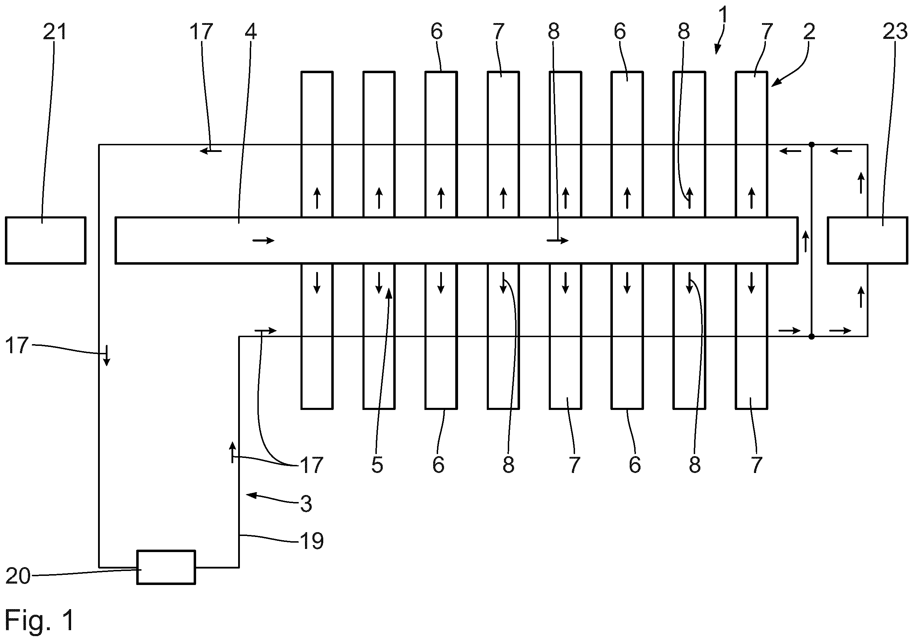

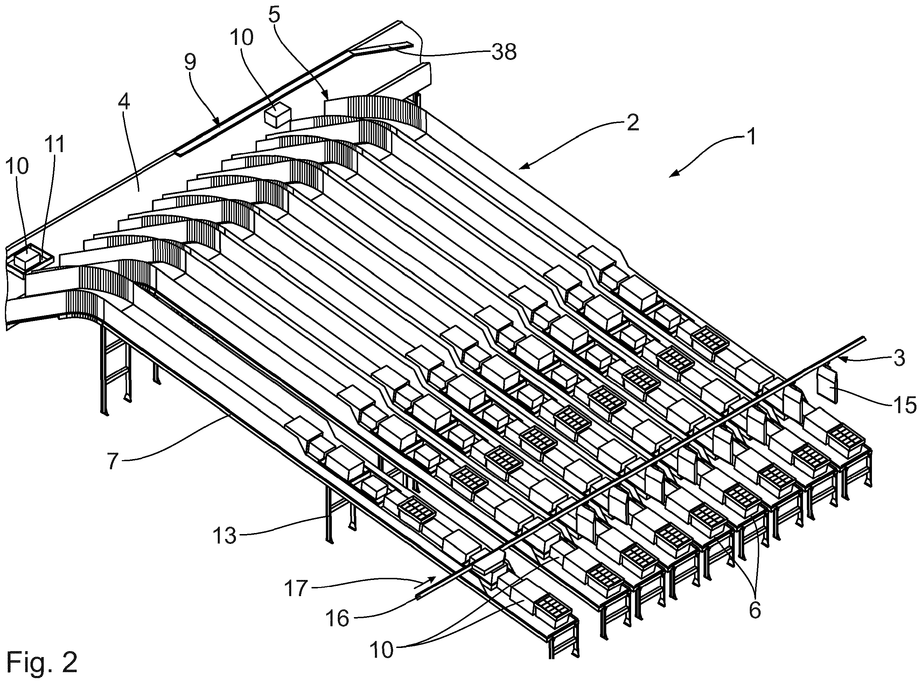

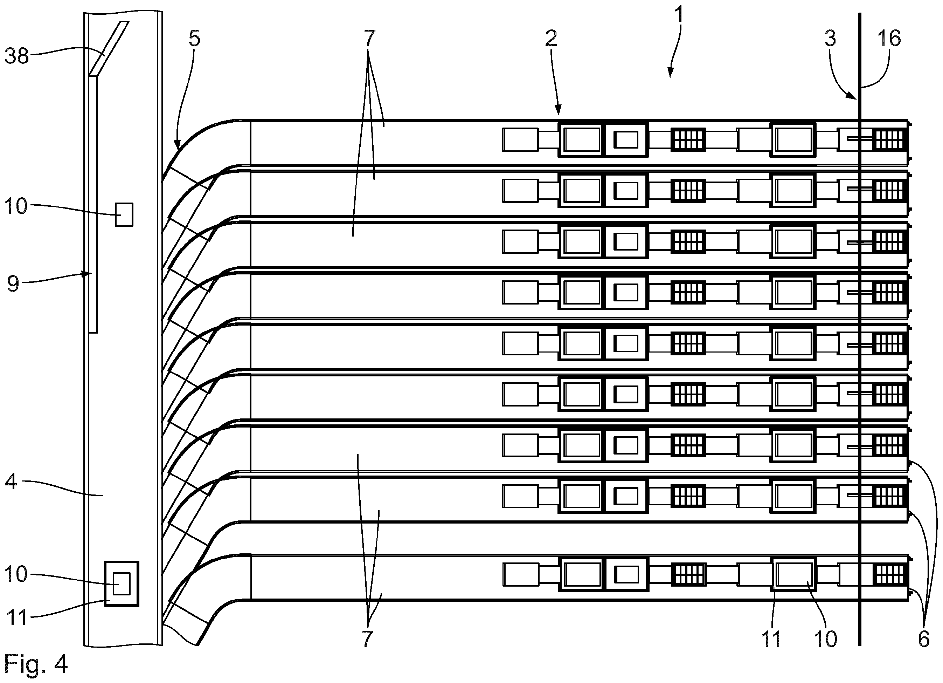

Eine in Fig. 1 bis 4 als Ganzes mit 1 bezeichnete Förderanlage umfasst einen Liege-Förderer 2 und einen Hänge-Förderer 3.

Mit dem Liege-Förderer 2 werden Waren, insbesondere Liege-Förderer-Waren liegend gefördert. Dazu weist der Liege-Förderer 2 einen Förderabschnitt 4 in Form eines Förderbandes auf. Ferner weist der Liege-Förderer 2 einen Sorter 5 mit mehreren Abgabestellen 6 auf. Gemäß dem gezeigten Ausführungsbeispiel ist der Sorter 5 als Schuhsorter ausgeführt. Es sind auch andere Ausführungsformen für den Sorter 5 möglich. Die Abgabestellen 6 sind jeweils an einem freien Ende einer Rampe 7 angeordnet. Die Rampen 7 sind jeweils fördertechnisch mit dem Förderabschnitt 4 verbunden.

Gemäß dem gezeigten Ausführungsbeispiel erstrecken sich entlang des Förderabschnitts 4 quer, insbesondere senkrecht zu einer Förderabschnitt-Förderrichtung 8 beidseitig jeweils acht Rampen 7. Der Sorter 5 weist insgesamt sechzehn Abgabestellen 6 auf. Am Förderabschnitt 4 sind Ausschleuseelemente 9 in Form von Ausschleusemechaniken, sogenannter Schuhe, angeordnet, die ein gesteuertes Ausschleusen der auf dem Förderabschnitt 4 geförderten Liege-Förderer-Waren 10 zu der jeweiligen Rampe 7 bewerkstelligen. Die Ausschleuseelemente 9 werden durch eine nicht dargestellte Kulisse in eine Abgabeanordnung 38 überführt, die sich quer zur Förderabschnitt-Förderrichtung 8 erstreckt und eine passive Zwangsführung der Liege-Förderer-Waren 10 zu der jeweiligen Rampe 7 ermöglicht. Die Ausschleuseelemente 9 sind insbesondere entlang der Förderabschnitt-Förderrichtung 8 und/oder quer dazu verlagerbar, um das Ausschleusen der Liege-Förderer-Waren 10 in die jeweilige Rampe 7 durchzuführen.

Die Liege-Förderer-Waren 10 können unmittelbar auf dem Förderband des Förderabschnitts 4 angeordnet sein. Für den Transport der Liege-Förderer-Waren 10 können auch Förderbehältnisse beispielsweise ein Förderkorb 11 vorgesehen sein. Der Förderkorb 11 wird auch als Tray bezeichnet.

Die Rampen 7 des Liege-Förderers 2 sind gemäß dem gezeigten Ausführungsbeispiels mit einem Neigungswinkel n gegenüber der horizontalen geneigt angeordnet. Der Neigungswinkel n ist insbesondere derart bemessen, dass ein selbsttätiges, schwerkraftbedingtes Fördern der Liege-Förderer-Waren entlang der Rampen 7 bis zu der jeweiligen Abgabestelle 6 erfolgen kann. Gemäß dem gezeigten Ausführungsbeispiel beträgt der Neigungswinkel n 7°. Vorteilhaft ist es, wenn der Neigungswinkel mindestens 3°, insbesondere mindestens 5° und insbesondere mindestens 7° beträgt, um eine staufreie, schwerkraftbedingte Förderung zu gewährleisten. Vorteilhaft ist es auch, wenn der Neigungswinkel n kleiner ist als 20°, insbesondere kleiner als 15° und insbesondere kleiner als 10°, damit der Staudruck auf die jeweils vorderste, an der Abgabestelle 6 angeordnete Liege-Förderer-Ware nicht zu groß wird.

Der Liege-Förderer 2 weist einen Liege-Förderer-Grundaufbau 12 auf, der insbesondere eine Vielzahl von modularen Stützelementen 13 umfasst. Die Stützelemente 13 sind insbesondere höhenverstellbar ausgeführt, um insbesondere den Neigungswinkel n der Rampen 7 veränderlich einzustellen. Mit dem Liege-Förderer-Grundaufbau 12 ist der Liege-Förderer 2 am Boden 14 abgestützt. Vorteilhaft ist es, wenn der Hänge-Förderer 3 ebenfalls am Liege-Förderer-Grundaufbau 12 abgestützt ist. Es ist insbesondere entbehrlich, einen separaten Grundaufbau für den Hänge-Förderer vorzusehen. Die Investitionskosten sind reduziert. Ein derartiger Hänge-Förderer 3 kann vorteilhaft an einen bereits bestehenden Liege-Förderer 2 nachgerüstet werden.

Mit dem Hänge-Förderer 3 werden die Waren an einem Warenträger hängend gefördert. Gemäß dem gezeigten Ausführungsbeispiel ist der Warenträger als Transporttasche 15 ausgeführt. Die Transporttasche 15 ist mittels eines nicht näher dargestellten Rolladapters 18 entlang einer Förderschiene 16 des Hänge-Förderers 3 entlang einer Hänge-Förderer-Richtung 17 verlagerbar. Gemäß dem gezeigten Ausführungsbeispiel weist der Hänge-Förderer 3 einen nicht dargestellten Hänge-Förderer-Antrieb auf, der insbesondere in Form einer endlos umlaufenden, angetriebenen Förderkette ausgeführt ist, mit dem die Rolladapter 18, an welchem die Transporttaschen 15 hängend gefördert werden, angetrieben werden.

Gemäß dem gezeigten Ausführungsbeispiel ist der Hänge-Förderer 3 mit einem einzigen Förderstrang 19 ausgeführt, der durch die Förderschiene 16 vorgegeben ist. Entlang des Förderstrangs 19 ist eine Hänge-Förderer-Aufgabestelle 20 angeordnet, an der die Hänge-Förderer-Waren 25 dem Hänge-Förderer 3 aufgegeben werden. Hänge-Förderer-Waren 25 sind insbesondere kleine und leichte Waren, beispielsweise kleine Versandtaschen, insbesondere Kuverts, gepolsterte Kuverts und/oder sogenannte Polytaschen, Päckchen oder Kartons. Der Förderstrang 19 ist als endlos umlaufender Förderstrang ausgeführt und verläuft sequentiell zu den einzelnen Abgabestellen 6 des Sorters 5. Gemäß dem gezeigten Ausführungsbeispiel sind sämtliche Abgabestellen 6 des Sorters 5 über die Rampen 7 mit dem Förderstrang 19 fördertechnisch verbunden. Der Förderstrang 19 ermöglicht die Abgabe von Hänge-Förderer-Waren an jeder beliebigen Abgabestelle 6 der Förderanlage 1.

Es ist denkbar, den Förderstrang 19, insbesondere im Bereich der Rampen 7 durch zusätzliche Förderstränge zu ergänzen, um den Warendurchsatz für den Hänge-Förderer 3 zu erhöhen.

Eine Hänge-Förderer-Aufgabestelle 20 ist räumlich entfernt von dem Sorter 5 und insbesondere den Abgabestellen 6 angeordnet. Insbesondere kann die Hänge-Förderer-Aufgabestelle 20 benachbart zu einem Lagerort, beispielsweise einer Anlieferstelle für die Hänge-Förderer-Waren 25, wie beispielsweise einer Lkw-Rampe, angeordnet sein, an dem die Hänge-Förderer-Waren gelagert sind. Insbesondere kann die Hänge-Förderer-Aufgabestelle 20 eine für Hänge-Förderer-Waren spezialisierte Aufgabestelle sein, an der die Hänge-Förderer-Waren, insbesondere automatisiert, in die Transporttaschen 15 beladen werden.

Die Förderanlage 1 weist ferner eine Aufgabestelle 21 auf, an der Waren beispielsweise aus einem Warenlager und/oder einer Anlieferstelle für die Hänge-Förderer-Waren 25, wie beispielsweise einer Lkw-Rampe, dem Liege-Förderer 2 oder dem Hänge-Förderer 3 aufgegeben werden. Die Aufgabestelle 21 ist insbesondere in einem Bereich der Förderanlage 1 angeordnet, in dem sich der Liege-Förderer 2 und der Hänge-Förderer 3, insbesondere Förderabschnitt 4 und der Förderstrang 19, kreuzen. An der Aufgabestelle 21 kann eine Bedienperson beispielsweise gesteuert durch eine Anzeige oder eine Kennzeichnung der jeweiligen Waren diese in den Hänge-Förderer 3 oder den Liege-Förderer 2 aufgeben.

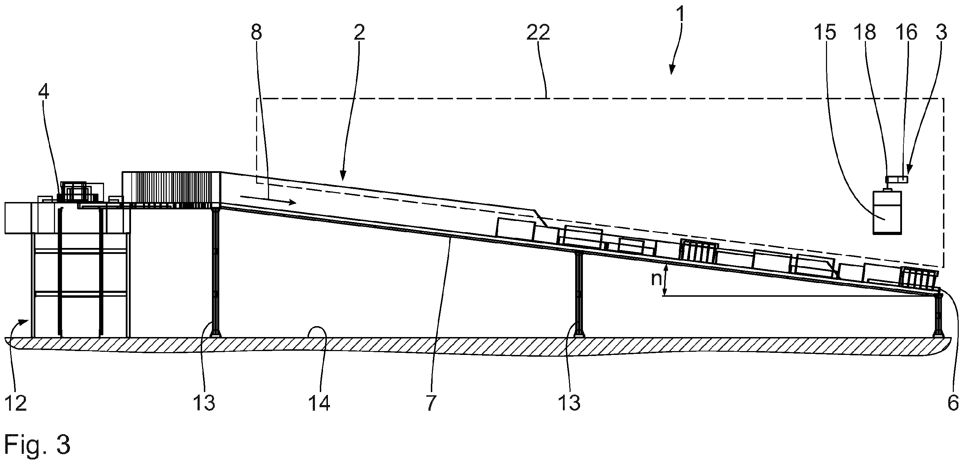

Dadurch, dass die Rampen 7 nach unten geneigt ausgeführt sind, ergibt sich ein virtueller Bauraum 22, der in Fig. 3 schematisch angedeutet ist. Der virtuelle Bauraum 22 ist profilförmig ausgeführt mit einem trapezförmigen Querschnitt, der sich entlang der Hänge-Förderer-Richtung 17 erstreckt. Der virtuelle Bauraum 22 erstreckt sich in einer vertikalen Richtung über die Bauhöhe des Sorters 5 hinaus, um zusätzlichen Bauraum für die Durchführung von Wartungs- und/oder Reparaturarbeiten am Hänge-Förderer 3 zu schaffen. Die Zugänglichkeit des Hänge-Förderers 3 von oben ist dadurch verbessert. Vorteilhaft ist, dass der Hänge-Förderer 3 innerhalb dieses virtuellen Bauraums 22 angeordnet ist. Das bedeutet insbesondere, dass für die Ergänzung bzw. Nachrüstung eines existierenden Liege-Förderers 2 mit einem Hänge-Förderer 3 zu einer erfindungsgemäßen Förderanlage 1 kein zusätzlicher Bauraumbedarf besteht.

Gemäß dem gezeigten Ausführungsbeispiel weist die Förderanlage 1 eine Hänge-Förderer-Abgabestelle 23 auf, die zusätzlich zu den Abgabestellen 6 des Sorters 5 besteht. Die Hänge-Förderer-Abgabestelle 23 kann insbesondere räumlich entfernt von dem Sorter in der Förderanlage 1 angeordnet sein. An der Hänge-Förderer-Abgabestelle 23 werden insbesondere ausschließlich Hänge-Förderer-Waren aus dem Hänge-Förderer 3 abgegeben. Die Abgabe an der Hänge-Förderer-Abgabestelle 23 erfolgt insbesondere direkt in Versandbehältnisse wie Postsäcke oder Kisten.

Die Transporttaschen 15 sind gemäß dem gezeigten Ausführungsbeispiel derart ausgeführt, dass sie entleerbar, insbesondere automatisiert entleerbar sind, um die Hänge-Förderer-Waren im Bereich der Abgabestellen automatisiert abgeben zu können. Dazu kann die Transporttasche 15 beispielsweise an einer Rückwand eine Abgabeöffhung aufweisen, durch die hindurch die Hänge-Förderer-Ware aus der Transporttasche 15 abgegeben werden und schwerkraftbedingt auf die darunter angeordnete Rampe 7 fallen kann. Die Transporttasche 15 kann auch, insbesondere in einem Bodenbereich der Transporttasche 15, öffenbar ausgeführt sein, um die Hänge-Förderer-Waren 25 auf die Rampe 7 durch Herausfallen abgeben zu können.

Nachfolgend wird anhand der Fig. 1 bis 4 ein Verfahren zum Fördern verschiedener Waren näher erläutert.

Die Waren 10, 25 werden aus einem nicht dargestellten Wareneingang zu der Aufgabestelle 21 gefördert und dort von einer Bedienperson dem Liege-Förderer 2 oder dem Hänge-Förderer 3 aufgegeben. Die Waren 10, 25 können hierzu entsprechend gekennzeichnet sein, um der Bedienperson den entsprechenden Förderer 2, 3 vorzugeben. Die Kennzeichnung kann beispielsweise auch in Form eines Barcodes hinterlegt sein, der an der Ware angebracht ist, wobei die Bedienperson den Barcode scannt und an einem Anzeigeelement einen entsprechenden Hinweis erhält. Die Kennzeichnung kann auch in einem Identifikationsdatenträger, beispielsweise einem RFID-Chip hinterlegt sein, die an der Ware selbst, an der Transporttasche 15 oder in der Verpackung der Ware angeordnet ist. Mittels eines entsprechenden Transponderlesers kann die Information für die Bedienperson an einem Anzeigegerät angezeigt werden. Eine Identifikation der Waren kann auch optisch, insbesondere kameragestützt erfolgen. Es ist auch denkbar, dass die Bedienperson selbst entscheidet, ob die jeweilige Ware in den Liege-Förderer 2 oder den Hänge-Förderer 3 aufgegeben wird. In diesem Fall erfolgt eine manuelle Identifikation der Waren.

Die auf dem Liege-Förderer 2 aufgegebenen Waren sind Liege-Förderer-Waren 10, die mittels der Ausschleuseelemente 9 jeweils einer Rampe 7 zugeführt und an den Abgabestellen 6 einer weiteren Bedienperson zur Verfügung gestellt werden. An den Abgabestellen 6 können die Waren 10 für den Versand vorbereitet oder einer Kommissionierung zugeführt werden.

Die Waren, die dem Hänge-Förderer 3 entweder an der Aufgabestelle 21 und/oder der Hänge-Förderer-Aufgabestelle 20 aufgegeben worden sind, werden entlang der Förderschiene 16 zu den Rampen 7 geführt und oberhalb der Rampen 7 hinweggefördert. Mittels einer nicht näher dargestellten Entleerungsvorrichtung werden die Transporttaschen 15 von einer nicht dargestellten Steuerungseinheit gesteuert entleert. Die in der Transporttasche 15 geförderte Hänge-Förderer-Ware 25 fällt schwerkraftbedingt aus der Transporttasche 15 nach unten auf die jeweils darunter liegende Rampe 7. Insbesondere erfolgt das Entleeren der Transporttasche 15 automatisiert und ohne die Förderbewegung des Hänge-Förderers 3 zu unterbrechen. Die Transporttasche 15 wird also im Vorbeifahren entleert. Die entleerte Fördertasche 15 wird entlang der Förderschiene 16 wieder zurückgeführt und kann an der Aufgabestelle 21 und/oder der Hänge-Förderer-Aufgabestelle 20 wieder mit Waren bestückt werden. Die Förderanlage 1 ermöglicht es, unterschiedlichste Warentypen in ein und derselben Förderanlage zu fördern und zu sortieren.

Die Transporttasche 15 kann auch zu der Hänge-Förderer-Abgabestelle 23 gefördert und dort, insbesondere automatisiert, entleert werden.

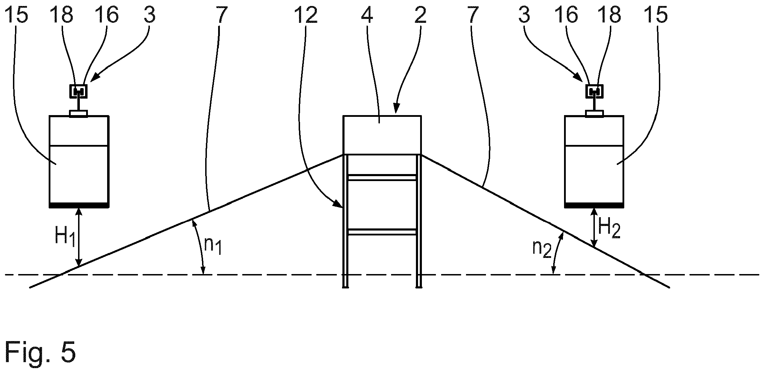

Fig. 5 zeigt eine weitere Ausführung eines Liege-Förderers 2. Komponenten, die denjenigen entsprechen, die vorstehend unter Bezugnahme auf die Fig. 1 bis 4 bereits erläutert wurden, tragen die gleichen Bezugsziffern und werden nicht nochmals im Einzelnen diskutiert.

Bei dem Liege-Förderer 2 sind die beiden gegenüberliegend angeordneten Rampen 7 mit unterschiedlichen Neigungswinkeln n₁ und n₂ angeordnet. Es ist insbesondere vorteilhaft, wenn der jeweilige Neigungswinkel n₁ bzw. n₂ der Rampen 7 veränderlich einstellbar ist, indem beispielsweise die Stützelemente 13 veränderlich höhenverstellbar ausgeführt sind. Aus den unterschiedlichen Neigungswinkeln n₁, n₂ resultieren unterschiedliche Abwurfhöhen H₁, H₂. Als Abwurfhöhe H wird der vertikale Abstand der Unterkante der Transporttasche 15 zu der Rampe 7 bezeichnet. Je geringer die Abwurfhöhe H ist, desto geringer ist das Risiko von Beschädigungen und/oder Zerstörungen der Hänge-Förderer-Waren.

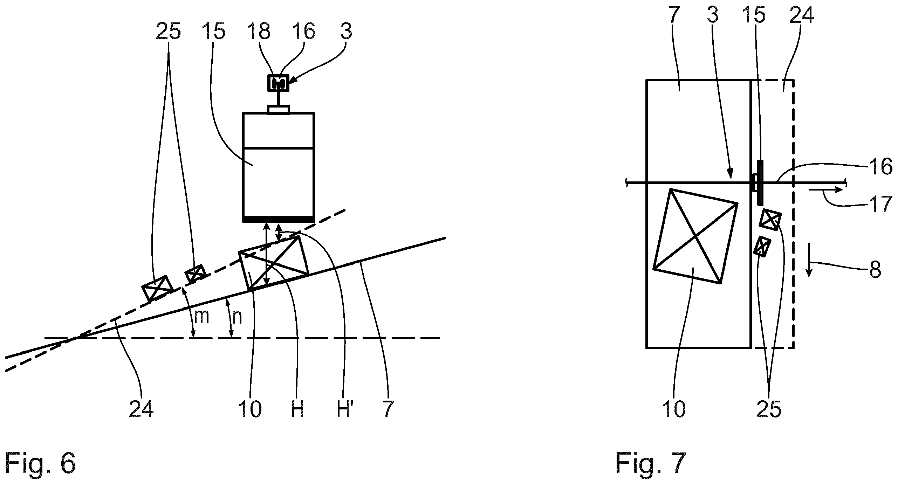

Fig. 6 und 7 zeigen eine weitere Ausführung eines Liege-Förderers 2. Komponenten, die denjenigen entsprechen, die vorstehend unter Bezugnahme auf die Fig. 1 bis 5 erläutert wurden, tragen die gleichen Bezugsziffern und werden nicht nochmals im Einzelnen diskutiert.

Der wesentliche Unterschied gegenüber den vorherigen Ausführungsbeispielen besteht darin, dass an der Rampe 7 eine Zusatz-Rampe 24 für die Abgabe der Hänge-Förderer-Waren vorgesehen ist. Die Zusatz-Rampe 24 erstreckt sich parallel zu der Rampe 7 entlang der Förderabschnitt-Förderrichtung 8. Die Zusatz-Rampe 24 erstreckt sich insbesondere quer und insbesondere senkrecht zur Hänge-Förderer-Richtung 17. Die Hänge-Förderer-Waren 25 können aus den Transporttaschen 15 unmittelbar auf die Zusatz-Rampe 24 abgegeben werden. Die Zusatz-Rampe 24 ist gegenüber der Horizontalen mit einem Neigungswinkel m angeordnet, der größer ist als der Neigungswinkel n der Rampe 7. Dadurch ist gewährleistet, dass die Abwurfhöhe H' von der Transporttasche 15 auf die Zusatz-Rampe 24 reduziert ist und die Gefahr von Beschädigungen und/oder Zerstörungen ausgeschlossen ist. Durch die Zusatz-Rampe 24 wird die reduzierte Abwurfhöhe H' ermöglicht, die gegenüber der theoretischen Abwurfhöhe H reduziert ist. Die theoretische Abwurfhöhe ergibt sich aus dem Abstand der Transporttasche 15 zu der Rampe 7. Dieser Abstand ist erforderlich, damit die Liege-Förderer-Waren 10 auf der Rampe 7 zuverlässig unter den Transporttaschen 15 gefördert werden können.

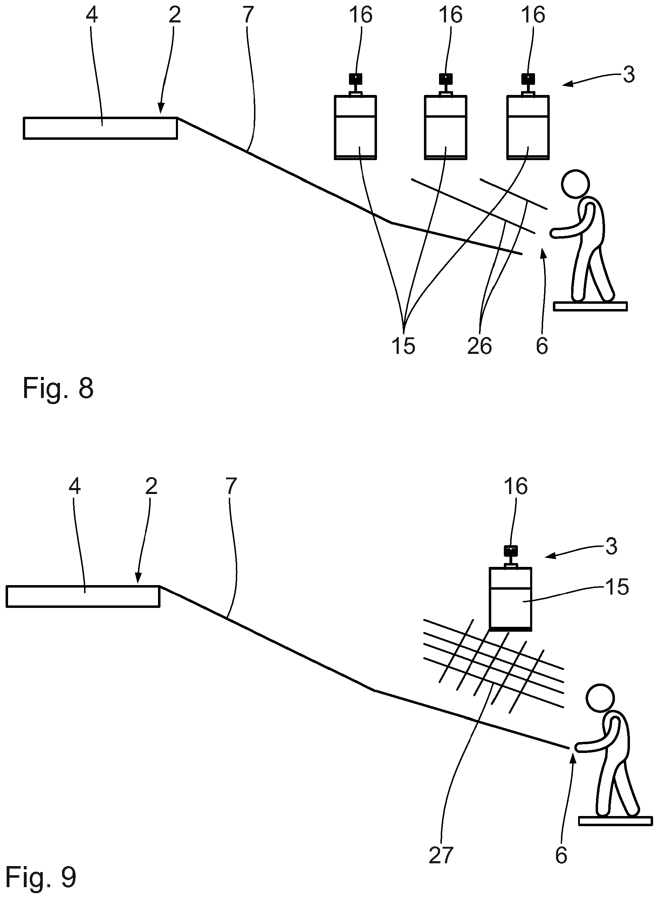

Fig. 8 zeigt eine weitere Ausführung eines Liege-Förderers 2. Komponenten, die denjenigen entsprechen, die vorstehend unter Bezugnahme auf die Fig. 1 bis 7 erläutert wurden, tragen die gleichen Bezugsziffern und werden nicht nochmals im Einzelnen diskutiert.

Gemäß dieser Ausführungsform weist der Hänge-Förderer 3 drei parallele Förderschienen 16 auf. Entlang jeder der Förderschienen 16 können Transporttaschen 15 gefördert werden.

Die in Fig. 8 links dargestellte Förderschiene dient zum Abgeben von Hänge-Förderer-Waren 25 aus der Transporttasche 15 auf die Rampe 7. Um eine Trennung der Hänge-Förderer-Waren 25 auf den verschiedenen Förderschienen 16 zu gewährleisten, sind für die beiden jeweils zusätzlichen Förderschienen 16 Abgabe-Speicherelemente vorgesehen. Die Abgabe-Speicherelemente sind jeweils als zusätzliche Rampen 26 ausgeführt. Die zusätzlichen Rampen 26 sind von der Rampe 7 des Sorters 5 getrennt ausgeführt. In diesen zusätzlichen Rampen 26 können die Hänge-Förderer-Waren 25 zwischengespeichert werden. Insbesondere sind Hänge-Förderer-Waren 25 von den Waren auf der Rampe 7 räumlich getrennt. Eine logische Unterscheidung der Waren an der Abgabestelle ist dadurch möglich. Insbesondere kann die Bedienperson die an den Abgabe-Speicherelementen abgegebenen und zwischengespeicherten Waren unmittelbar von dort entnehmen. Die Bedienperson hat an der Abgabestelle 6 drei verschiedene, voneinander getrennte Rampen 7, 26 zur Auswahl. Die Abgabe-Speicherelemente sind gemäß dem gezeigten Ausführungsbeispiel jeweils oberhalb der Rampe 7 des Sorters 5 angeordnet. Es ist denkbar, dass die beiden Abgabe-Speicherelemente 26 nebeneinander, aber oberhalb der Rampe 7 angeordnet sind. Es ist auch denkbar, dass, ähnlich wie die Zusatz-Rampe 24 gemäß Fig. 6, 7 seitlich neben der Rampe 7 angeordnet sind.

Es ist auch denkbar, die Ausläufe der Rampen 7 und 26 zusammenzuführen, um alle Waren an einen gemeinsamen Ausgang an der Abgabestelle 6 der Bedienperson zur Verfügung zu stellen.

Fig. 9 zeigt eine weitere Ausführungsform eines Liege-Förderers 2. Der wesentliche Unterschied gegenüber der Ausführung gemäß Fig. 8 besteht darin, dass das Abgabe-Speicherelement in Form eines Auffangnetzes 27 ausgeführt ist, das insbesondere höhenverstellbar oberhalb der Rampe 7 angeordnet ist. Das Auffangnetz ist flexibel, sodass Beschädigungen und/oder Zerstörungen der Hänge-Förderer-Waren 25 beim Herausfallen aus den Transporttaschen 15 ausgeschlossen sind. Die Bedienperson kann die Hänge-Förderer-Ware 25 an der Abgabestelle 6 unmittelbar aus dem Auffangnetz entnehmen.

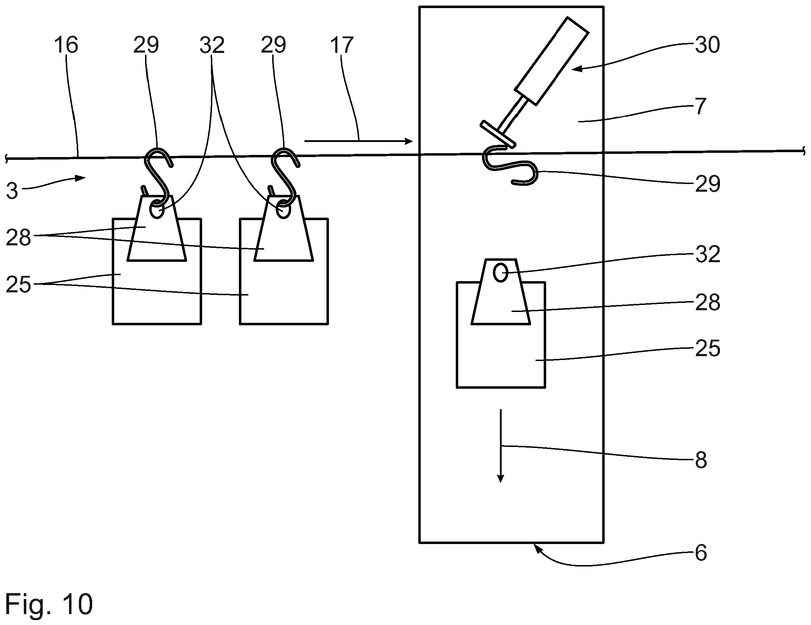

Fig. 10 zeigt eine weitere Ausführung einer Förderanlage 1. Komponenten, die denjenigen entsprechen, die vorstehend unter Bezugnahme auf die Fig. 1 bis 9 bereits erläutert wurden, tragen die gleichen Bezugsziffern und werden nicht nochmals im Einzelnen diskutiert.

Bei dem gezeigten Ausführungsbeispiel ist der Warenträger als Trägeretikett 28 ausgeführt. Das Trägeretikett 28 ist an der Hänge-Förderer-Ware 25 unmittelbar oder an deren Verpackung befestigt, insbesondere aufgeklebt. Das Trägeretikett 28 weist eine Öffnung auf durch die ein Transporthaken 29 geführt ist. An dem Transporthaken 29 hängend können die Hänge-Förderer-Waren 25 mittels des Trägeretiketts 28 gefördert werden.

Im Bereich der Rampe 7 ist ein Entkopplungselement 30 angeordnet. Gemäß dem gezeigten Ausführungsbeispiel ist das Entkopplungselement 30 ein Linearaktor, insbesondere ein Pneumatikzylinder, ein Hydraulikzylinder oder ein elektrischer Linearantrieb. Durch das Entkopplungselement 30 kann der Transporthaken 19 an der Förderschiene 16 derart geschwenkt werden, dass das Trägeretikett 28 von dem Transporthaken 29 entkoppelt wird und schwerkraftbedingt selbständig auf die Rampe 7 fällt. Das Entkopplungselement 30 kann auch ein Drehaktor sein, der den Transporthaken 29 derart an der Förderschiene 16 dreht, dass die Hänge-Förderer-Ware 25 mit dem Trägeretikett 28 von dem Transporthaken 29 entkoppelt wird.

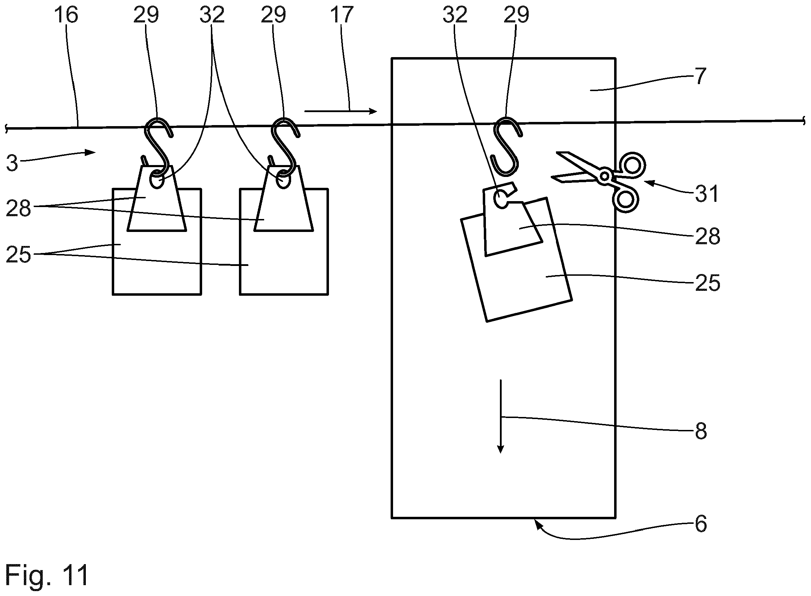

Fig. 11 zeigt eine Ausführung einer Förderanlage 1. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Der Unterschied gegenüber dem vorherigen Ausführungsbeispiel besteht darin, dass zum Abgeben der Hänge-Förderer-Waren 25 an der Rampe 7 das Entkopplungselement 31 als Schneideinheit ausgeführt ist. Die Schneideinheit öffnet das Trägeretikett 28 im Bereich der Durchgangsöffhung 32, durch die hindurch der Transporthaken 29 geführt ist. Die Hänge-Förderer-Ware 25 kann schwerkraftbedingt nach unten auf die Rampe 7 fallen. Die Schneideinheit 31 kann als mechanische Schneideinheit und/oder als Laser-Schneideinheit ausgeführt sein.

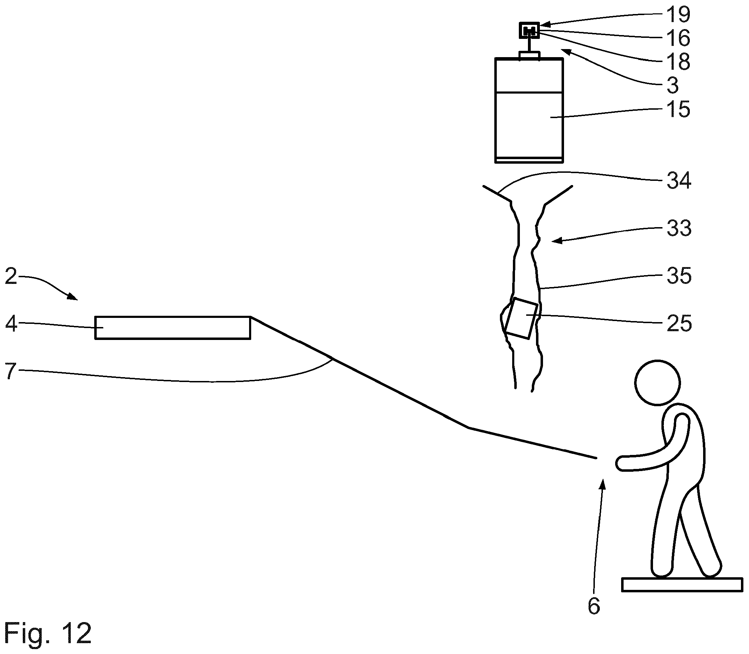

Fig. 12 zeigt eine weitere Ausführung einer Förderanlage 1. Komponenten, die denjenigen entsprechen, die vorstehend unter Bezugnahme auf die Fig. 1 bis 11 erläutert wurden, tragen die gleichen Bezugsziffern und werden nicht nochmals im Einzelnen diskutiert.

Im Bereich der Abgabestellen 6 ist für den Förderstrang 19 des Hänge-Förderers 3 ein Bremselement 33 vorgesehen, um die Fallgeschwindigkeit der Hänge-Förderer-Waren 25 zu reduzieren und eine Beschädigung und/oder Zerstörung der Hänge-Förderer-Waren 25 beim Auftreffen auf die Rampe 7 zu vermeiden. Insbesondere ist für jeden Förderstrang 19 ein Bremselement 33 an jeder Rampe 7 vorgesehen. Durch das Abbremsen der Fallgeschwindigkeit ist es möglich, die Hänge-Förderer-Waren 25 aus größerer Höhe abzuwerfen. Dadurch können Bauräume erschlossen werden, die in einer typischen Förderanlage bislang unbenutzt geblieben sind.

Das Bremselement 33 weist gemäß dem gezeigten Ausführungsbeispiel an seiner Oberseite, die der Transporttasche 15 zugewandt ist, einen Einführtrichter 34 auf, um ein zuverlässiges Abgeben der Hänge-Förderer-Waren 25 in das Bremselement 33 zu gewährleisten. An den Einführtrichter 34 ist ein flexibler Textilschlauch 35 angeschlossen. Der Textilschlauch 35 weist insbesondere zwei gegenüberliegend angeordnete Textilbahnen auf, die flexibel, insbesondere elastisch, miteinander verbunden sind. Durch die Ausdehnung der die Textilbahnen verbindenden Verbindungselemente und die Reibung zwischen den Hänge-Förderer-Waren 25 und der Innenseite des Textilschlauchs 35 wird die vertikale Fallgeschwindigkeit der Hänge-Förderer-Waren 25 abgebremst. Dadurch ist gewährleistet, dass die Hänge-Förderer-Waren 25 nicht ungebremst durch den Textilschlauch 35 vertikal nach unten fallen. Dadurch, dass der Textilschlauch 35 eine ausreichende Flexibilität und Elastizität aufweist, ist verhindert, dass die Hänge-Förderer-Waren 25 in dem Textilschlauch 35 blockieren. Der Textilschlauch 35 ist ähnlich einem Personenrettungsschlauch ausgeführt, wie er zur Bergung von Personen aus größeren Höhen eingesetzt wird.

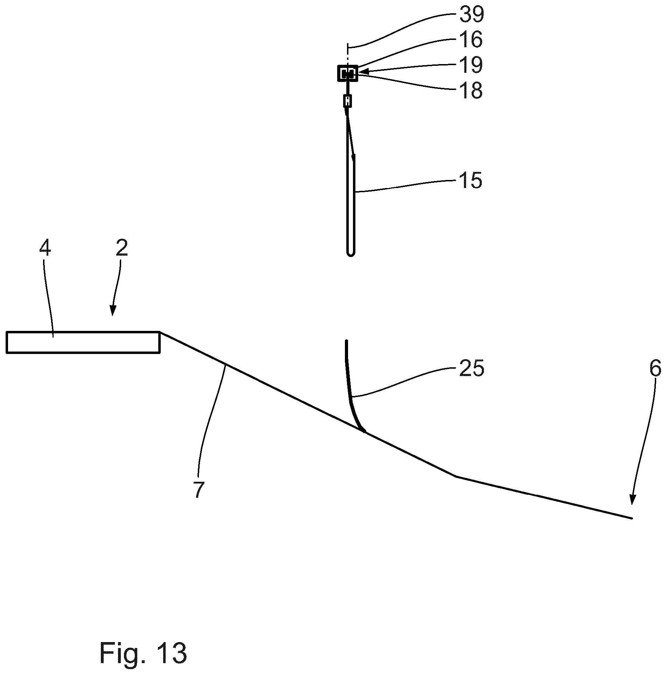

Fig. 13 zeigt eine weitere Ausführung der Förderanlage 1. Komponenten, die denjenigen entsprechen, die vorstehend unter Bezugnahme auf die Fig. 1 bis 12 bereits erläutert wurden, tragen die gleichen Bezugsziffern und werden nicht nochmals im Einzelnen diskutiert.

Der wesentliche Unterschied gegenüber den vorherigen Ausführungsbeispielen besteht darin, dass die Transporttasche 15 für die Abgabe der Hänge-Förderer-Waren 25, insbesondere in Form von Postsendungen, insbesondere Kuverts, um eine Vertikalachse 39 um 90° gedreht angeordnet ist. Dadurch ist es möglich, dass die abgegebene Hänge-Förderer-Ware 25 im Wesentlichen linienförmig auf die Rampe 7 auftrifft. Eine Beschädigung der Hänge-Förderer-Ware 25 durch das Auftreffen auf die Rampe 7 ist im Wesentlichen ausgeschlossen. Bei einer ungedrehten Anordnung der Fördertasche, wie dies beispielsweise in Fig. 3 dargestellt ist, würde die Hänge-Förderer-Ware, insbesondere wenn es sich dabei um ein Kuvert handelt, im Wesentlichen punktförmig auf der Rampe 7 auftreffen. Dadurch könnte das Kuvert in dem Eckenbereich beschädigt werden. Das Risiko der Beschädigung der Hänge-Förderer-Ware 25 ist durch das Drehen der Tasche 15 vermieden.

Die Drehung der Transporttasche 15 um die Vertikalachse 39 kann durch ein passives Anschlagelement und/oder einen aktiven Antrieb, insbesondere direkt an der Transporttasche 15, erfolgen.

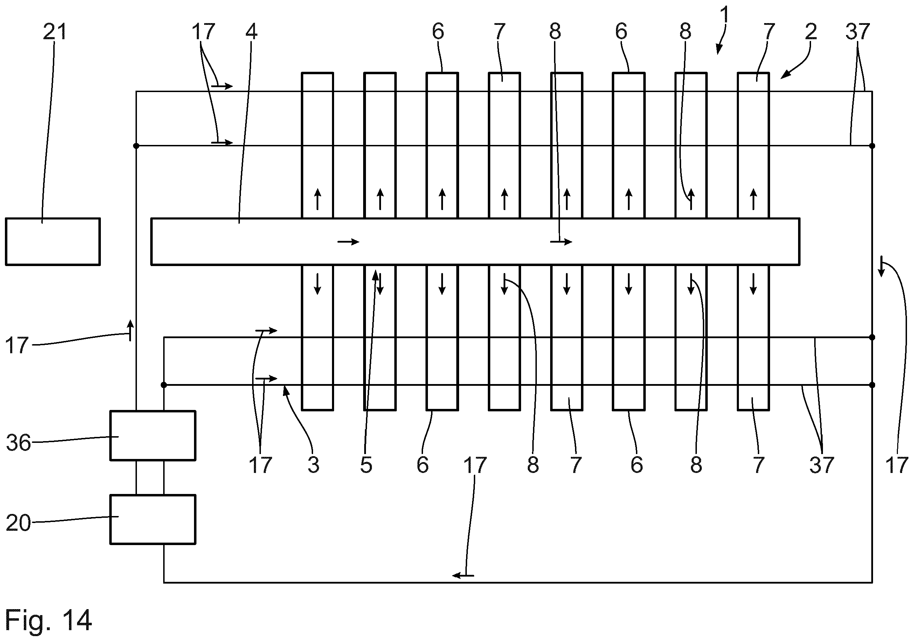

Fig. 14 zeigt eine weitere Ausführung einer Förderanlage 1. Komponenten, die denjenigen entsprechen, die vorstehend unter Bezugnahme auf die Fig. 1 bis 13 bereits erläutert wurden, tragen die gleichen Bezugsziffern und werden nicht nochmals im Einzelnen diskutiert.

Bei der Förderanlage 1 gemäß Fig. 14 weist der Hänge-Förderer 3 zwei Förderstränge 19 auf, die jeweils einer Gruppe von Abgabestellen 6 zugeordnet sind, also jeweils mit einer Gruppe von Abgabestellen 6 fördertechnisch verbunden sind. Gemäß dem gezeigten Ausführungsbeispiel sind jeweils die linksseitig des Förderabschnitts 4 angeordneten Rampen mit den daran angeordneten Abgabestellen 6 zu einer ersten Gruppe von Abgabestellen 6 zusammengeführt. Entsprechend sind die rechtsseitig des Förderabschnitts 4 angeordneten Abgabestellen zu einer zweiten Gruppe von Abgabestellen 6 zusammengefasst. Jeweils ein Förderstrang 19 ist mit der ersten und der andere Förderstrang 19 ist mit der zweiten Gruppe von Abgabestellen 6 fördertechnisch verbunden. Um diese Aufteilung der Hänge-Förderer-Waren 25 auf die beiden Förderstränge 19 zu ermöglichen, ist der Hänge-Förderer-Aufgabestelle 20 ein Verteilermodul 36 nachgeschaltet. Gemäß dem gezeigten Ausführungsbeispiel ist die Aufgabestelle 21 dem Verteilermodul 36 nachgeschaltet. Es ist auch denkbar, dass die Aufgabestelle 21 stromaufwärts in Bezug auf die Hänge-Förderer-Richtung 17 bezüglich der des Verteilermoduls 36 angeordnet ist.

Ein weiterer Unterschied besteht darin, dass jeder der Förderstränge 19 mehrere Teil-Förderstränge 37 aufweist. Mit den Teil-Fördersträngen 37 kann die Durchsatzrate der Förderanlage 1 zusätzlich gesteigert werden. Die Teil-Förderstränge 37 sind insbesondere dann vorteilhaft, wenn die Fördertaschen 15 in der in Fig. 13 gezeigten Anordnung, also um eine Vertikalachse 39 gedreht, gefördert werden. In dieser gedrehten Anordnung ist ein erhöhter Abstand zwischen den Taschen erforderlich, so dass der Warendurchsatz entlang eines einzelnen Förderstrangs reduziert wäre. Dadurch, dass mehrere, insbesondere mindestens zwei, insbesondere mindestens drei und insbesondere mindestens vier Teil-Förderstränge anstelle eines einzelnen Förderstrangs vorgesehen sind, ist ein hoher Warendurchsatz auch bei um 90° gedrehten Transporttaschen 15 gewährleistet.

## Patentansprüche

1. Förderanlage zum Fördern von Waren (10, 25) mit
a. einem Liege-Förderer (2) zum liegenden Fördern der Waren (10) und
b. einem Hänge-Förderer (3), mit dem die Waren (25) an einem Warenträger (15; 28) hängend gefördert werden,
**dadurch gekennzeichnet, dass**
- der Liege-Förderer (2) eine Sortiervorrichtung (5) mit mehreren Abgabestellen (6) aufweist, an welchen die Waren (10) sortiert bereitgestellt werden,
- die Sortiervorrichtung (5) Rampen (7) zur Förderung der Waren (10) zu den Abgabestellen (6) aufweist,
- der Hänge-Förderer (3) mit mindestens einer der Abgabestellen (6) zur unmittelbaren Abgabe der Waren (25) an der mindestens einen Abgabestelle (6) verbunden ist.

2. Förderanlage gemäß Anspruch 1, **dadurch gekennzeichnet, dass** der Hänge-Förderer (3) zumindest bereichsweise oberhalb der mindestens einen Abgabestelle (6) verläuft.

3. Förderanlage gemäß einem der vorstehenden Ansprüche, **dadurch gekennzeichnet, dass** der Warenträger als Transporttasche (15) ausgeführt ist, die insbesondere entleerbar ausgeführt ist.

4. Förderanlage gemäß Anspruch 3, **dadurch gekennzeichnet, dass** die Transporttasche (15) um eine Vertikalachse drehbar, insbesondere drehantreibbar ausgeführt ist.

5. Förderanlage gemäß einem der vorstehenden Ansprüche, **gekennzeichnet durch** mindestens eine Aufgabestelle (21), an der die Waren (10, 25) dem Liege-Förderer (2) und/oder dem Hänge-Förderer (3) aufgegeben werden.

6. Förderanlage gemäß einem der vorstehenden Ansprüche, **gekennzeichnet durch** mindestens eine Hänge-Förderer-Aufgabestelle (20), an der ausschließlich Hänge-Förderer-Waren (25) dem Hänge-Förderer (3) aufgegeben werden.

7. Förderanlage gemäß einem der vorstehenden Ansprüche, **gekennzeichnet durch** mindestens eine Hänge-Förderer-Abgabestelle (23), an der ausschließlich Hänge-Förderer-Waren (25) aus dem Hänge-Förderer (3) abgegeben werden.

8. Förderanlage gemäß einem der vorstehenden Ansprüche, **dadurch gekennzeichnet, dass** die Rampen (7) mit einem ersten Ende an einen Förderschnitt (4) des Liege-Förderers (2) angeschlossen sind und ein zu einem zweiten Ende hin gerichtetes Gefälle und/oder einen Rampen-Antrieb aufweisen, so dass insbesondere die Waren (10) entlang der Rampe (7) von dem Förderabschnitt (4) weg zu der Abgabestelle (6) hin gefördert werden.

9. Förderanlage gemäß einem der vorstehenden Ansprüche, **dadurch gekennzeichnet, dass** an mindestens einer der Abgabestellen (6) ein Bremselement (33) für, insbesondere die aus dem Hänge-Förderer (3) abgegebenen, Waren (25) vorgesehen ist.

10. Förderanlage gemäß einem der vorstehenden Ansprüche, **dadurch gekennzeichnet, dass** der Hänge-Förderer (3) mindestens einen Förderstrang (19) aufweist, der, insbesondere sequenziell, entlang der Abgabestellen (6) verläuft.

11. Förderanlage gemäß einem der Ansprüche 1 bis 9, **dadurch gekennzeichnet, dass** der Hänge-Förderer (3) mehrere Förderstränge (19) aufweist, die jeweils mit einer Gruppe von Abgabestellen (6) fördertechnisch verbunden sind.

12. Förderanlage gemäß einem der vorstehenden Ansprüche, **gekennzeichnet durch** einen Liege-Förderer-Grundaufbau (12), mit dem der Liege-Förderer (2), insbesondere ein Förderabschnitt (4) und/oder die Rampen (7), am Boden (14) abgestützt ist, wobei der Hänge-Förderer (3) am Liege-Förderer-Grundaufbau (12) abgestützt ist.

13. Förderanlage gemäß einem der vorstehenden Ansprüche, **dadurch gekennzeichnet, dass** an den Abgabestellen (6) jeweils mindestens ein Abgabe-Speicherelement (26; 27) für die Hänge-Förderer-Waren (25) vorgesehen ist.

14. Verfahren zum Fördern von Waren (10, 25) umfassend die Verfahrensschritte
- Liegendfördern der Waren (10) mittels eines Liege-Förderers (2), der eine Sortiervorrichtung (5) mit mehreren Abgabestellen (6) und Rampen (7) zur Förderung der Waren (10) zu den Abgabestellen (6) aufweist, an welchen die Waren (10) sortiert bereitgestellt werden,
- Hängendfördern der Waren (25) mittels eines Hänge-Förderers (3) zu mindestens einer der Abgabestellen (6),
- unmittelbares Abgeben der hängend geförderten Waren (25) an der mindestens einen Abgabestelle (6).

## Claims

1. Conveyor system for conveying goods (10, 25) having
a. a lying conveyor (2) for conveying the goods (10) lying on the lying conveyor and
b. an overhead conveyor (3), by way of which the goods (25) are conveyed in a suspended manner on a goods carrier (15; 28),
**characterized in that**
- the lying conveyor (2) has a sorting device (5) with multiple delivery points (6) at which the goods (10) are provided in a sorted manner,
- the sorting device (5) has ramps (7) for conveying the goods (10) to the delivery points (6),
- the overhead conveyor (3) is connected to at least one of the delivery points (6) for direct delivery of the goods (25) to the at least one delivery point (6).

2. Conveyor system according to claim 1, **characterized in that** the overhead conveyor (3) extends at least in regions above the at least one delivery point (6).

3. Conveyor system according to any one of the preceding claims, **characterized in that** the goods carrier is realized as a transport pocket (15), which is realized, in particular, so as to be emptiable.

4. Conveyor system according to claim 3, **characterized in that** the transport pocket (15) is realized so as to be rotatable, in particular rotationally drivable, about a vertical axis.

5. Conveyor system according to any of the preceding claims, **characterized by** at least one feed point (21), at which the goods (10, 25) are fed to the lying conveyor (2) and/or the overhead conveyor (3).

6. Conveyor system according to any one of the preceding claims, **characterized by** at least one overhead conveyor feed point (20), at which exclusively overhead conveyor goods (25) are fed to the overhead conveyor (3).

7. Conveyor system according to any one of the preceding claims, **characterized by** at least one overhead conveyor delivery point (23), at which exclusively overhead conveyor goods (25) are delivered from the overhead conveyor (3).

8. Conveyor system according to any one of the preceding claims, **characterized in that** the ramps (7) are connected to a conveyor portion (4) of the lying conveyor (2) by way of a first end and have a gradient directed toward a second end and/or a ramp drive, so that in particular the goods (10) are conveyed along the ramp (7) away from the conveyor portion (4) toward the delivery point (6).

9. Conveyor system according to any one of the preceding claims, **characterized in that** a braking element (33) is provided for the goods (25), in particular for the goods delivered from the overhead conveyor (3), at at least one of the delivery points (6).

10. Conveyor system according to any one of the preceding claims, **characterized in that** the overhead conveyor (3) has at least one conveyor strand (19) which extends, in particular sequentially, along the delivery points (6).

11. Conveyor system according to any one of claims 1 to 9, **characterized in that** the overhead conveyor (3) has multiple conveyor strands (19) which are each connected to a group of delivery points (6) using conveyor technology.

12. Conveyor system according to any one of the preceding claims, **characterized by** a lying conveyor basic structure (12), by way of which the lying conveyor (2), in particular a conveyor portion (4) and/or the ramps (7), is supported on the floor (14), wherein the overhead conveyor (3) is supported on the lying conveyor basic structure (12).

13. Conveyor system according to any one of the preceding claims, **characterized in that** at least one delivery storage element (26; 27) is provided at each delivery point (6) for the overhead conveyor goods (25).

14. Method for conveying goods (10, 25) comprising the steps of
- conveying the lying goods (10) by means of a lying conveyor (2), which has a sorting device (5) with multiple delivery points (6) and ramps (7) for conveying the goods (10) to the delivery points (6), at which the goods (10) are provided in a sorted manner,
- conveying the goods (25) in a suspended manner by means of an overhead conveyor (3) to at least one of the delivery points (6),
- immediately delivering the goods (25) that have been conveyed in a suspended manner to the at least one delivery point (6).

## Revendications

1. Installation de transport pour le transport de marchandises (10, 25) avec
a. un convoyeur couché (2) pour transporter les marchandises (10) à l'horizontale, et
b. un convoyeur suspendu (3), avec lequel les marchandises (25) sont transportées en étant suspendues à un support de marchandises (15 ; 28),
**caractérisée en ce que**
- le convoyeur couché (2) présente un dispositif de tri (5) avec plusieurs points de distribution (6), auxquels les marchandises (10) sont mises à disposition de manière triée,
- le dispositif de tri (5) présente des rampes (7) pour le transport des marchandises (10) vers les points de distribution (6),
- le convoyeur suspendu (3) est relié à au moins l'un des points de distribution (6) pour la distribution directe des marchandises (25) au niveau dudit au moins un point de distribution (6).

2. Installation de transport selon la revendication 1, **caractérisée en ce que** le convoyeur suspendu (3) s'étend au moins par zones au-dessus dudit au moins un point de distribution (6).

3. Installation de transport selon l'une quelconque des revendications précédentes, **caractérisée en ce que** le support de marchandises est réalisé sous forme de poche de transport (15), qui est en particulier réalisée de manière à pouvoir être vidée.

4. Installation de transport selon la revendication 3, **caractérisée en ce que** la poche de transport (15) est réalisée de manière à pouvoir tourner autour d'un axe vertical, en particulier à pouvoir être entraînée en rotation.

5. Installation de transport selon l'une quelconque des revendications précédentes, **caractérisée par** au moins un point de chargement (21) auquel les marchandises (10, 25) sont chargées sur le convoyeur couché (2) et/ou sur le convoyeur suspendu (3).

6. Installation de transport selon l'une quelconque des revendications précédentes, **caractérisée par** au moins un point de chargement de convoyeur suspendu (20), où seules des marchandises de convoyeur suspendu (25) sont chargées sur le convoyeur suspendu (3).

7. Installation de transport selon l'une quelconque des revendications précédentes, **caractérisée par** au moins un point de distribution de convoyeur suspendu (23) auquel sont exclusivement distribuées des marchandises de convoyeur suspendu (25) provenant du convoyeur suspendu (3).

8. Installation de transport selon l'une quelconque des revendications précédentes, **caractérisée en ce que** les rampes (7) sont raccordées par une première extrémité à une section de transport (4) du convoyeur couché (2) et présentent une pente dirigée vers une deuxième extrémité et/ou un entraînement de rampe, de sorte que les marchandises (10), en particulier, sont transportées le long de la rampe (7) en s'éloignant de la section de transport (4) vers le point de distribution (6).

9. Installation de transport selon l'une quelconque des revendications précédentes, **caractérisée en ce qu'**un élément de freinage (33) pour les marchandises (25), en particulier celles qui sont déchargées du convoyeur suspendu (3), est prévu sur au moins l'un des points de distribution (6).

10. Installation de transport selon l'une quelconque des revendications précédentes, **caractérisée en ce que** le convoyeur suspendu (3) comprend au moins une ligne de convoyage (19) qui s'étend, en particulier de manière séquentielle, le long des points de distribution (6).

11. Installation de transport selon l'une quelconque des revendications 1 à 9, **caractérisée en ce que** le convoyeur suspendu (3) comporte plusieurs lignes de convoyage (19) reliées chacune à un groupe de points de distribution (6) par une technique de convoyage.

12. Installation de transport selon l'une quelconque des revendications précédentes, **caractérisée par** une structure de base de convoyeur couché (12), avec laquelle le convoyeur couché (2), en particulier une section de transport (4) et/ou les rampes (7), est supporté sur le sol (14), le convoyeur suspendu (3) étant supporté sur la structure de base de convoyeur couché (12).

13. Installation de transport selon l'une quelconque des revendications précédentes, **caractérisée en ce qu'au** moins un élément de stockage de distribution (26 ; 27) pour les marchandises de convoyeur suspendu (25) est prévu sur chacun des points de distribution (6).

14. Procédé de transport de marchandises (10, 25) comprenant les étapes de procédé suivantes
- convoyage à l'horizontale des marchandises (10) au moyen d'un convoyeur couché (2) qui présente un dispositif de tri (5) avec plusieurs points de distribution (6) et des rampes (7) pour le transport des marchandises (10) vers les points de distribution (6) auxquels les marchandises (10) sont mises à disposition de manière triée,
- transport suspendu des marchandises (25) au moyen d'un convoyeur suspendu (3) vers au moins l'un des points de distribution (6),
- distribution de manière immédiate des marchandises transportées suspendues (25) au niveau dudit au moins un point de distribution (6).
